Europäisches Patentamt

European Patent Office

Office européen des brevets

(11) Veröffentlichungsnummer: **0 326 047**
**A2**

## (12) EUROPÄISCHE PATENTANMELDUNG

(21) Anmeldenummer: 89101037.3

(51) Int. Cl.⁴: **B21D 53/30**

(22) Anmeldetag: 21.01.89

(30) Priorität: 21.01.88 DE 3801628

(43) Veröffentlichungstag der Anmeldung:
**02.08.89 Patentblatt 89/31**

(84) Benannte Vertragsstaaten:
**CH DE IT LI NL**

(71) Anmelder: **Th. Kieserling & Albrecht GmbH & Co.**
**Postfach 10 07 45**
**D-5650 Solingen(DE)**

(72) Erfinder: **Junklewitz, Hugo, Dipl.-Ing.**
**Kirchweg 14**
**D-5653 Leichlingen(DE)**
Erfinder: **Koch, Rolf-Eckart, Dipl.-Ing.**
**Pfaffenberger Weg 103**
**D-5650 Solingen(DE)**

(54) **Felgenprofilieranlage.**

(57) Gezeigt ist eine Werkzeugwechselvorrichtung (13) für eine aus drei Profiliermaschinen (1, 11, 12) in Einständerbauweise bestehende Profilieranlage. Die auf je einer Außenseite der Profiliermaschinen angeordneten Werkzeuge (4, 5, 9, 19) werden gleichzeitig von diesen abgezogen und auf achsstummelförmige Werkzeugaufnahmen (31 - 36) an der Wechselvorrichtung geschoben. Für jedes Werkzeug an den Profiliermaschinen sind zwei Werkzeugaufnahmen (21-26, 31-36) an der Werkzeugwechseleinrichtung (13) vorgesehen, die alle an einem gemeinsamen Träger (28) angeordnet sind. Ein Satz Werkzeugaufnahmen (31-36) ist zunächst leer und übernimmt beim Werkzeugwechsel die gebrauchten Werkzeuge. Nach dem Transfer (20→30) eines in einer Schwinge (29) schlittenartig geführten Trägers (28) befindet sich der zweite Satz Werkzeugaufnahmen (21-26) in Gegenüberstellung mit den Werkzeugaufnahmen an den Profiliermaschinen, auf die die neuen Werkzeuge alsdann aufgeschoben werden. Die Schwinge (29) ist zum Werkzeugwechsel in die Arbeits- und Bedienseite der Profiliermaschinen hochgeklappt. Während des Betriebs der Profilieranlage wird die Schwinge zurückgeschwenkt und gibt die Profiliermaschinen auf deren Bedienungsseite frei.

Fig.1

## Felgenprofilieranlage

Die Erfindung betrifft eine Felgenprofilieranlage nach dem Oberbegriff von Anspruch 1. Die Erfindung befaßt sich mit der Vereinfachung des Wechsels der Profilierwerkzeuge an Profiliermaschinen der Einständerbauweise und mit der Verkürzung der Werkzeugwechselzeiten. Werkzeuge sind die Rollen, die mit Vorstufen das Profil der fertigen Felge an ihrem Umfang tragen.

Um dem Betreiber eine möglichst knappe Bemessung des Vorrates an Felgen einer bestimmten Form und Größe zu erlauben, muß eine Felgenprofiliermaschine die Möglichkeit eines schnellen und unkomplizierten Werkzeugwechsels bieten.

Eine Maschine der Einständerbauart zum Profilieren von Felgen ist aus der US-PS 1 629 703 bekannt. Diese Maschinen haben den Vorzug, daß die Werkzeuge, also die Profilierrollen von der (Bedienungs-)seite her zugänglich sind. Durch ein Lösen von Spannmuttern an den Wellenstümpfen der Antriebswellen, auf denen die Profilierrollen angeordnet sind, lassen sich die letzteren von den Wellenstümpfen abziehen und durch die für die nächste Produktionsphase geeigneten Porfilierrollen ersetzen. Prinzipiell ist dieser Wechsel einfach, da die Profilierrollen in axialer Richtung zugänglich sind.

Der Zeitaufwand zum Wechseln der Profilierrollen ist jedoch nicht zu unterschätzen, da die Rollen aufgrund Ihres Gewichtes nicht mehr von Hand getragen werden können und das Abziehen der Rollen von den Wellenzapfen mit mechanischen Hilfsmitteln und der Transport der Rollen mit einem Kran oder ähnlichen Hilfsmitteln erfolgen muß.

Üblicherweise erfolgt die Profilierung von Felgen für Kraftfahrzeuge nicht in einem sondern in mehreren Arbeitsgängen. Dadurch bedingt, werden in der Praxis meistens 2 oder mehr Profiliermaschinen neben- bzw. hintereinander gestellt. Die Felgen erfahren zunächst mindestens eine Vorprofilierung, bevor sie in der letzten Profiliermaschine einer solchen Gruppe ihr endgültiges Profil erhalten. Zu einer solchen Gruppe von Profiliermaschinen gehört bei der heute üblichen automatischen Arbeitsweise eine Transportvorrichtung, die auf der Arbeitsseite der Profiliermaschinen vorzusehen ist und die den Freiraum um die Profilierrollen herum einschränkt.

Was die Zugänglichkeit der Profilierrollen anbetrifft, so kommt erschwerend hinzu, daß bei übereinander angeordneten Profilierrollen etwa auf Höhe der unteren Rolle beidseits derselben je eine Stützrolle vorgesehen ist, die ein Schwingen der Felge beim Profiliervorgang vermeidet und eine exakte Ausrichtung derselben sicherstellt.

Der Erfindung liegt die Aufgabe zugrunde, eine Wechselvorrichtung für die Profilierrollen einer Einständerprofiliermaschine zu schaffen, die einen Wechsel in kürzester Zeit mit einer baulich einfachen Wechselvorrichtung erlaubt.

Diese Aufgabe wird erfindungsgemäß durch die kennzeichnenden Merkmale von Anspruch 1 gelöst. Die Vorzüge der erfindungsgemäßen Lösung sind darin zu sehen, daß mit einer einfachen Schwenkvorrichtung, die das Transportsystem vor den Profiliermaschinen übergreift, eine Möglichkeit zum Rollenwechsel geschaffen wird, die in ihrer zurückgeklappten Stellung, vor dem Rollenwechsel und während des Betriebs der Profiliermaschinen, eine Beschickung ihrer Werkzeugaufnahmen erlaubt und die Profiliermaschinen frei zugänglich macht. Für jedes zu wechselnde Werkzeug an den Profiliermaschinen sind zwei Aufnahmen an der Wechselvorrichtung vorgesehen, die eine zur Aufnahme des Werkzeugs, das sich noch an der Profiliermaschine befindet und die andere zur Aufnahme des neuen einzuwechselnden Werkzeugs. Die beiden Aufnahmen befinden sich abwechselnd vor der maschinenseitigen Werkzeugaufnahme und können zu diesem Zwecke schwenkbar oder verschiebbar ausgebildet sein, so daß die Wechselstellung vor den maschinenseitigen Werkzeugaufnahmen möglich ist.

In der bevorzugten Ausgestaltung der Erfindung nach Anspruch 2 soll auch der Wechsel im engeren Sinne, nämlich das Verschieben der Profilierrollen von dem Wellenstumpf an der Profiliermaschine auf den Achsstummel an der Wechselvorrichtung maschinell erfolgen. Hierzu werden die Profilierrollen auf den Wellenstümpfen an der Profiliermaschine hydraulisch gespannt und es sind parallel zur Wellenachse Greifer vorgesehen, die die Profilierrollen von der Profiliermaschine auf den Achsstummel an der Wechselvorrichtung bewegen.

Gem. Anspruch 3 ist für alle Profiliermaschinen einer Linie eine gemeinsame Wechselvorrichtung vorgesehen, mit der alle Rollen der Linie gleichzeitig ausgewechselt werden. Aber auch beim Rollenwechsel für nur eine Profiliermaschine ist ein Träger vorgesehen, der zwischen einer ersten Position, in der er das alte Werkzeug aufnimmt und einer zweiten Position, in der er das neue Werkzeug vor die maschinenseitigen Werkzeugaufnahmen bringt, verfahrbar ist, der also je zwei Werkzeugaufnahmen für jedes Werkzeug an der Profiliermaschine aufweist.

In erster Linie ist als Wechselvorrichtung an einen schwenkbaren Träger gedacht, der entsprechend den Ansprüchen 4 und 5 ausgebildet ist. Die Achse, um die der als Schwinge ausgebildete Träger für die Werkzeugaufnahmen der Wechselvorrichtung schwingt, erstreckt sich parallel zur Durchlaufrichtung der zu bearbeitenden Felge. Sie ist vorzugsweise im Abstand von der Profilierlinie und der Transporteinrichtung angeordnet, so daß diese durch einen Gang von der Wechseleinrichtung getrennt sind. Im Ergebnis beeinträchtigt die Wechseleinrichtung die Arbeit und die Zugänglichkeit der Profiliermaschinen nicht.

In der Weiterbildung der Erfindung nach Anspruch 6 sind die Werkzeugaufnahmen an der Werzeugwechseleinrichtung auf einem Schlitten angeordnet, der parallel zur Schwenkachse des Trägers verschiebbar ist. In einer Endlage des Schlittens sind die leeren Werkzeugaufnahmen vis-a-vis mit den Werkzeugen an der Maschine angeordnet und in der zweiten Endlage des Schlittens werden die zweiten Werkzeugaufnahmen mit den einzuwechselnden Werkzeugen am Träger den Wellenstümpfen an der Profiliermaschine gegenübergestellt.

Die Werkzeugaufnahmen an dem Träger sind in einem Abstand von der Schwenkachse des Trägers angeordnet, so daß der Träger bzw. die daran vorgesehenen Werkzeugaufnahmen in der auf die Profiliermaschinen zu geschwenkten Stellung gem. Anspruch 7 über den Gang und über die Transporteinrichtung bis zu den Wellenstümpfen ragt.

In einer weiteren Ausgestaltung ist, wie mit Anspruch 8 verfolgt, vorgesehen, einen um 90° schwenkbaren Träger vorzusehen, der in der Vorbereitungsphase von oben beladen werden kann und der in der hochgeschwenkten Position mit mit den Wellenstümpfen an der Profiliermaschine fluchtenden Achsstummeln einen unmittelbaren Werkzeugwechsel von den Werkzeugaufnahmen an der Maschine auf die Werkzeugaufnahmen an dem Träger erlaubt.

Der Transport der Profilierrollen von den Wellenstümpfen an der Profiliermaschine auf die Achsstummel an der Werkzeugwechselvorrichtung erfolgt gem Anspruch 9 mit einer Abziehvorrichtung. Die Abziehvorrichtung ist an der Wechseleinrichtung vorgesehen und wird mit dem Träger hin-und hergeschwenkt. Mit der Abziehvorrichtung wird der Wechsel der Profilierrollen zwischen den Werkzeugaufnahmen an den Profiliermaschinen und an der Wechselvorrichtung bewirkt. Dieser Wechsel der Werkzeuge erfolgt auf geradliniger Bahn. Insbesondere ist vorgesehen, jeder Werkzeugaufnahme an der Wechselvorrichtung eine separate Abziehvorrichtung zuzuordnen, damit Werkzeuge auch beliebig einzeln gewechselt werden können.

Zur Sicherung der Profilierrollen auf den Wellenstümpfen der Profiliermaschinen sind an den letzteren gemäß Anspruch 10 federbelastete Spannmittel vorgesehen. Die Federn sind an der umlaufenden Welle angeordnet. Die Wellen sind hohl ausgebildet und werden von einer Schaltstange durchdrungen. Diese Schaltstange dient zum Lösen der Spannung der Profilierrollen auf den Wellenstümpfen. Ihr sind Steuermittel zur axialen Verschiebung auf Seiten der Profiliermaschine zugeordnet.

Die Erfindung wird im einzelnen anhand der Zeichnung näher erläutert, dabei zeigen :

Fig. 1 : Eine Draufsicht auf die Felgenprofilieranlage mit Werkzeugwechseleinrichtung

Fig. 2 : einen Schnitt gem. Linie II-II in Fig.1 bei geschwenkter Werkzeugwechseleinrichtung

Fig. 3 : eine Einzelheit zur Werkzeugspannung

Fig. 4 : eine Alternativlösung zu Fig. 2

Fig. 5 : Eine Ansicht nach Linie V - V in Fig. 4

Fig. 6 : Eine Ansicht nach Linie VI - VI in Fig. 4

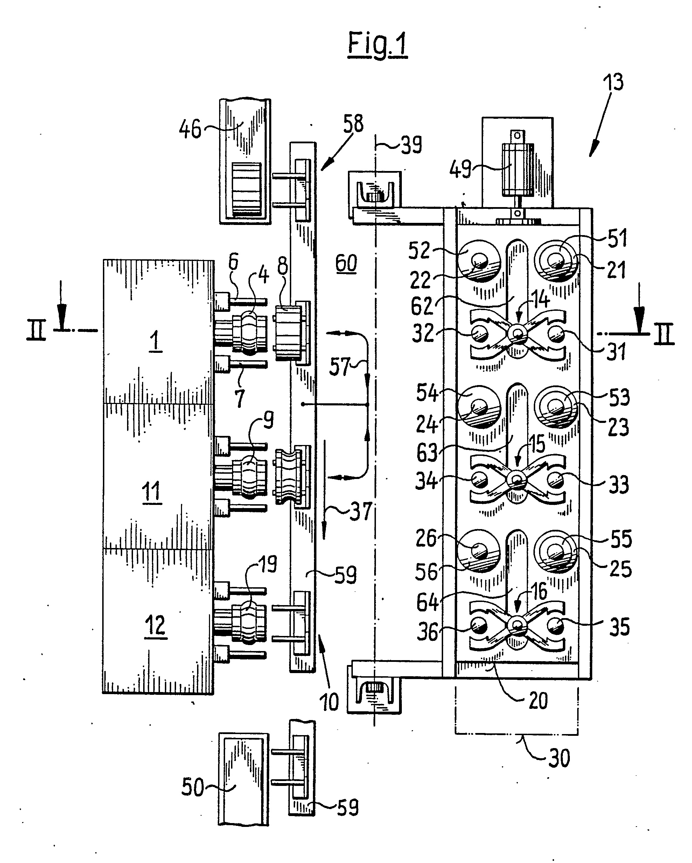

Fig. 1 zeigt eine Felgenprofilieranlage mit drei Einständer - Profiliermaschinen 1, 11, 12, mit einer Werkzeugwechselvorrichtung 13, einer Zuführeinrichtung 46 für die zylindrischen Felgenrohlinge, eine Transporteinrichtung 10, die die Felgen auf U-förmiger Bahn von der Zuführeinrichtung 46 zu der ersten Profiliermaschine 1 und von dort zu den weiteren Profiliermaschinen 11, 12 und schließlich zu einer Auslaufrinne 50 zum Abtransport der fertig profilierten Felgen weitertransportiert. Die Felgen werden im Groben in Richtung des Pfeiles 37 durch die Anlage bewegt.

Die Zuführeinrichtung 46 ist eine Rinne, in der die unbearbeiteten Felgen bis zu einem nicht gezeigten Anschlag vor die Übernahmestation 58 der Transporteinrichtung 10 rollen. Entsprechendes gilt für die Auslaufrinne 50, der die fertig profilierten Felgen im Arbeitstakt von der Transporteinrichtung 10 zugeführt werden.

Die Transporteinrichtung 10 besteht aus einem sich über die gesamte Breite der Profilieranlage erstreckenden Träger 59, der auf U-förmiger Bahn 57 parallel zu sich selbst mit hin- und hergehender Bewegung verschoben wird. Dabei werden jeweils 4 Felgenrohlinge 8 um eine Station weiter befördert.

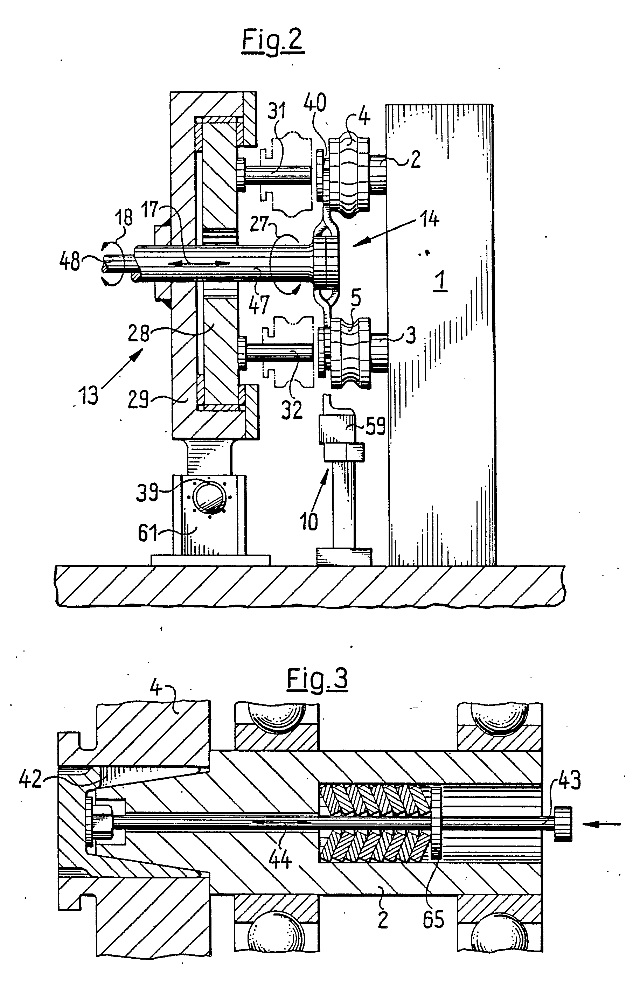

Die Profiliermaschinen 1, 11, 12 sind in ihrem Aufbau gleichartig. Es sind Maschinen in Einständer - Bauweise, die jeweils zwei vom Maschinenrahmen abkragende Wellenstümpfe 45 (Fig.3) aufweisen, von denen jeder eine Profilierrolle 4, 5, 9, 19 trägt. Seitlich neben der unteren Profilierrolle 5 sind 2 Stützrollen 6, 7 vorgesehen, die eine mittige Lage des Felgenrohlings 8 beim Profilieren sicherstellen und Pendelschwingungen vermeiden.

Die Werkzeugwechseleinrichtung 13 befindet sich auf der Arbeits- und Bedienseite der Felgenprofilieranlage. Sie ist in einem Abstand von den Profiliermaschinen angeordnet, daß die Profiliermaschinen 1, 11 und 12 von ihrer Arbeits- und Bedienseite her und auch die Transporteinrichtung 10 zugänglich bleiben. Zwischen der Achse 39 und der Transporteinrichtung 10 verbleibt ein Gang 60, den die Bedienungsperson der Anlage für Inspektionszwecke benutzen kann. Die Werkzeugwechseleinrichtung ist um eine horizontale Achse 39 schwenkbar. Sie wird zwischen einer horizontalen Lage (Fig.1) und einer vertikalen Lage (Fig.2) geschwenkt.

Die gezeigte Werkzeugwechseleinrichtung 13 besteht aus einem Ständer 61, an dem eine Schwinge 29 angelenkt und um die Achse 39 schwenkbar ist. Die Schwinge 29 hat Führungen, in denen ein Träger 28 gleitend geführt ist. Der Träger 28 ist zwischen den beiden Positionen 20 und 30 beweglich und wird von einem Zylinder 49 gesteuert. An dem schlittenförmigen Träger 28 sind Werkzeugaufnahmen 21 bis 26 und 31 bis 36 vorgesehen. Die Anordnung der Werkzeugaufnahmen an der Transporteinrichtung ist spiegelbildlich zu der Anordnung der Wellen 2, 3 an den Profiliermaschinen.

Der Träger 28 ist etwa auf seiner Längsmitte dreimal geschlitzt. Die Zahl der Schlitze bzw. Länglöcher 62, 63, 64 bestimmt sich nach der Zahl der Profiliermaschinen. Die Langlöcher werden durchgriffen von je einer Schere 14, 15, 16. Die Scheren sind in der Schwinge 29 gelagert. Die Scherenschenkel sind je an einer in der Schwinge 29 drehbar gelagerten Hohlwelle 47 und einer darin drehbar gelagerten Welle 48 befestigt. Beim Schwenken von Hohlwelle 47 und Welle 48 gem. den Pfeilen 18 und 27 öffnen und schließen sich die Scheren 14 bis 16. Die Scheren können zusätzlich in Richtung des Pfeiles 17 relativ zu der Schwinge 29 verschoben werde.

Die Klemmung der einzelnen Werkzeuge 4 an den konischen Wellenstümpfen 45 erfolgt, wie aus Fig. 3 ersichtlich, mit Hilfe einer geschlitzten Konusbüchse 42, die in Richtung des Pfeiles 44 vermittels einer Steuerstange 43 in axialer Richtung bewegt werden kann. Die Aufnahmebohrung der Werkzeuge 4 ist zylindrisch. Um den sich in axialer Richtung aufweitenden Ringspalt zwischen dem Wellenstumpf 45 und dem davon getragenen Werkzeug 4 auszufüllen ist die Konusbüchse 42 außen zylindrisch und innen konisch ausgebildet. Um einen zuverlässigen Spanneffekt zu erzielen, ist die Konusbüchse geschlitzt. Die Konusbüchse ist mit einer Steuerstange 43 verbunden, die die Antriebswelle mit dem Wellenstumpf 45 mittig durchdringt. Die Steuerstange hat einen Kragen 65, der sich über eine Feder 41 an der Welle 2 abstützt. Durch eine Betätigung der Steuerstange 43 von der dem Werkzeug 4 abgewandten Seite der Profiliermaschine her wird die Spannung des Werkzeugs 4 gelöst. Dabei zieht sich die Konusbüchse 42 aufgrund ihrer geschlitzten Ausbildung geringfügig zusammen und löst sich vom Werkzeug. Letzteres kann sodann mit minimalem Aufwand von der Konusbüchse 42 abgezogen werden.

Zum gleichzeitigen Wechsel aller Profilierwerkzeuge 4, 5, 9, 19 der Profiliermaschinen 1, 11 und 12 wird zunächst die Werkzeugwechseleinrichtung 13 in der in Fig. 1 gezeigten Stellung mit Ersatzwerkzeugen 51, 52, 53, 54, 55 und 56 ausgerüstet. Diese Werkzeuge werden auf die Werkzeugaufnahmen 21 bis 26 aufgesteckt, die zunächst nicht in Gegenüberstellung mit den Werkzeugen 4, 5, 9 und 19 an den Profiliermaschinen sind. Die Werkzeugaufnahmen 31, 32, 33, 34, 35 und 36, die den Werkzeugen an den Prfiliermaschinen gegenüber liegen, bleiben zunächst frei, damit sie die an den Profiliermaschinen in Betrieb befindlichen Werkzeuge aufnehmen können. Nachdem die Werkzeugwechseleinrichtung mit den neuen Werkzeugen ausgerüstet ist, wird die Schwinge 29 hochgeklappt. In der hochgeklappten Stellung nach Fig. 2 steht einer jeden Welle 2, 3 an den Profiliermaschinen eine Werkzeugaufnahme 31, 32 exakt fluchtend gegenüber. Die Scheren 14, 15, 16 greifen durch Verschwenken der Welle 48 und der Hohlwelle 47 in Hinterschneidungen 40 an den Werkzeugen 4, 5 ein. Durch eine Bewegungen der Scheren 14 bis 16 in Richtung des Pfeiles 17 werden die Werkzeuge 4, 5 auf die leeren Werkzeugaufnahmen 31, 32 gezogen. Die Scheren 14 bis 16 gehen wieder auf und der Träger 28 wird mittels des Zylinders 49 von der Position 20 in die Position 30 verschoben. Dabei werden die neuen Werkzeuge auf den Werkzeugaufnahmen 21 bis 26 in ihrer Gesamtheit gleichzeitig in Gegenüberstellung mit den Wellen 2, 3 und den übrigen Wellen an den Profiliermaschinen gebracht. Die Scheren werden in der zurückgezogenen Stellung wieder geschlossen und greifen in die Hinterschneidungen 40 der neuen Werkzeuge und schieben diese auf die vis-a-vis liegenden Stümpfe der Wellen 2 und 3. Die Spannung der neuen Werkzeuge erfolgt dann beim Zurückziehen der Steuerstangen 43 durch die Feder 41. Zum Abschluß des Werkzeugwechselvorgangs wird die Schwinge 29 zurückgeklappt.

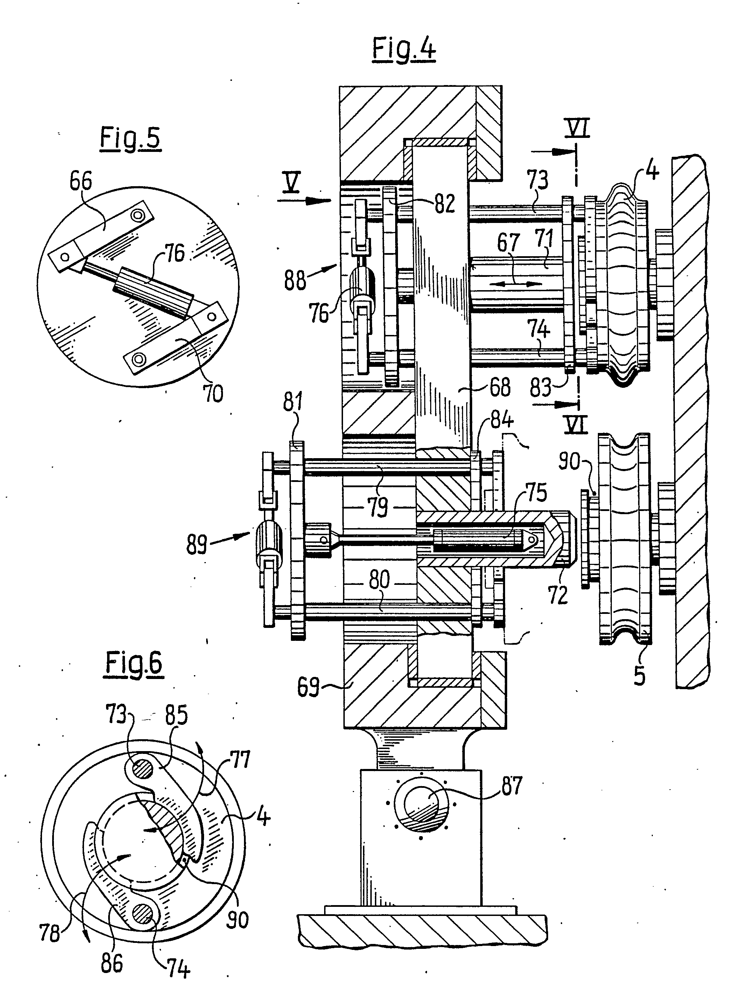

Die in Fig.4 gezeigte Alternativlösung zum Abziehen und Aufschieben der Werkzeuge 4, 5 zeichnet sich durch die Möglichkeit aus, jedes Werkzeug einzeln und unabhängig voneinander auswechseln zu können. Dabei ist die Schwinge 69 um das Gelenk 87 schwenkbar und kann in eine horizontale und in eine vertikale Position bewegt werden. Der Träger 68 ist in der Schwinge als in horizontaler Richtung verschiebbarer Schlitten geführt. Von ihm kragen in der in Fig. 4 gezeigten Stellung zwei Werkzeugaufnahmen 71, 72 ab, die den Werkzeugen 4, 5 und den zugehörigen Werkzeugaufnahmen an der Profiliermaschine vis à vis gegenüberstehen und mit diesen fluchten. Jede Werkzeugaufnahme an der Werkzeugwechselvorrichtung hat eine Abziehvorrichtung.

Jeder Werkzeugaufnahme 71, 72 ist eine Abziehvorrichtung 88, 89 zugeordnet, mit der die Werkzeuge 4, 5 unabhängig von einander in axialer Richtung 67 linear verschoben werden können.

Die Werkzeugwechselvorrichtungen 88, 89 sind gleichartig und bestehen aus je einer Tragplatte 81, 82, die von Spannwellen 73, 74, 79, 80 durchdrungen werden. Die Tragplatten 81, 82 sind an dem einen Ende der Spannwellen angeordnet, während am anderen Ende der Spannwellen, das den Werkzeugen 4, 5 zugewandt ist, Stützscheiben 83, 84 vorgesehen sind. Die Spannwellen sind zwischen den Tragplatten und den Stützscheiben am Träger 68 geführt. An dem werkzeugseitigen Ende der Spannwellen 73, 74, 79, 80 sind Greifhebel 85, 86 befestigt, an dem anderen Längsende der Spannwellen sind Spannhebel 66, 70 angeordnet, die durch einen Spannzylinder 76 miteinander verbunden sind. Mit dem Spannzylinder werden die Greifhebel 85, 86 in Richtung der Pfeile 77, 78 betätigt. Zu jeder Spannvorrichtung gehört weiterhin ein Schubzylinder 75, der die gesamte Abziehvorrichtung 89 mit oder ohne Werkzeug relativ zum Träger 68 in Richtung des Pfeiles 67 geradlinig verschiebt. Der Schubzylinder 75 ist zentrisch zur Werkzeugaufnahme 72 angeordnet, greift an der Tragplatte 81 an und stützt sich am Träger 68 ab.

Bei einer Axialbewegung der Abziehvorrichtung 89 wechselt das Werkzeug 5 von der maschinenseitigen Werkzeugaufnahme auf die Werkzeugaufnahme 72 an dem Träger 68 der Werkzeugwechselvorrichtung. Die Werkzeuge 4, 5 haben eine Hinterschneidung 90, in die die Greifhebel 85, 86 hineingeschwenkt werden, das Werkzeug erfassen und bei Ansteuerung des Schubzylinders 75 von der maschinenseitigen Werkzeugaufnahme auf die andere Werkzeugaufnahme 72 verschieben.

Die Abziehvorrichtung 89 ist in ihrer Grundstellung gezeichnet. Von dieser Grundstellung aus fährt sie gem. Pfeil 67 mit geöffneten Greifhebeln vor bis an das Werkzeug 5, und faßt mit den Greifhebeln durch Ansteuerung des Spannzylinders 76 in die Hinterschneidung 90 am Werkzeug 5, zieht das gelöste Werkzeug 5 (vergl. Fig. 3) mit Hilfe des Schubzylinders 75 von der maschinenseitigen Werkzeugaufnahme ab auf die Werkzeugaufnahme 72 an der Werkzeugwechselvorrichtung. Im Anschluß daran wird der Träger 68 senkrecht zur Zeichenebene in Fig. 4 verschoben und andere vorbereitete Werkzeuge und Werkzeugaufnahmen gelangen in Gegenüberstellung mit den maschinenseitigen Aufnahmen. Eine der Abziehvorrichtung 89 senkrecht zur Zeichenebene benachbarte Abziehvorrichtung wickelt alsdann den vorbeschriebenen Ablauf in umgekehrter Reihenfolge ab, wobei sich als Endergebnis ein anderes Werkzeug an der Stelle des in Fig. 4 gezeigten Werkzeugs 5 befindet.

## Ansprüche

1.) Felgenprofilieranlage, die folgenden Merkmale aufweist:

a) mindestens eine Felgenprofiliermaschine (1) in Einständer - Bauweise mit zwei Wellen (2, 3),

b) die Wellen tragen an ihren freien, aus der Maschine herausragenden Enden die Profilierwerkzeuge (4, 5),

c) von den Wellen (2, 3) ist zumindest eine drehangetrieben,

d) zwei Stützrollen (6, 7) sind seitlich neben der von dem Felgrohling (8) eingeschlossenen Profilierrolle (4) angeordnet,

e) eine Transporteinrichtung (10) im Bereich der Profilierrollen (4, 9, 19), die die Felgrohlinge zwischen den einzelnen Profiliermaschinen (1, 11, 12) befördert,

gekennzeichnet durch die folgenden Merkmale:

f) eine Werkzeugwechselvorrichtung (13) mit einem doppelten Satz Werkzeugaufnahmen (21-26, 31-36),

g) jeweils zwei Werkzeugaufnahmen (31, 32) der Werkzeugwechselvorrichtung (13) sind zwischen einer ersten Anordnung (20) in unmittelbarer Gegenüberstellung mit den Werkzeugaufnahmen an der Profiliermaschine (1) und einer zweiten Position (30) außerhalb der Bahn der im Wechselprozess befindlichen Werkzeuge (4, 5) beweglich,

2.) Felgenprofilieranlage nach Anspruch 1, die das folgende Merkmal aufweist:

h) Mittel (14-16) zum Bewegen der Werkzeuge (4, 5) zwischen den Werkzeugaufnahmen (21-26, 31-36) an der Wechselvorrichtung (13) und an der Profiliermaschine (1),

3.) Felgenprofilieranlage nach Anspruch 1, die das folgende Merkmal aufweist:

i) Die Werkzeugaufnahmen (21-26, 31-36) an der Werkzeugwechselvorrichtung (13) sind an einem gemeinsamen Träger (28), der zwischen den zwei Positionen (20, 30) vor der Profilieranlage beweglich ist, angeordnet,

4.) Felgenprofilieranlage nach Anspruch 3, die das folgende Merkmal aufweist:

j) der Träger (28) ist auf einer Schwinge (29) angeordnet,

5.) Felgenprofilieranlage nach Anspruch 4, die das folgende Merkmal aufweist:

k) die Schwinge (29) wird um eine im Abstand vor der Profilieranlage angeordnete, vorzugsweise waagerechte und ortsfeste und sich zur Transportrichtung (37) der Felge (8) parallel erstreckende Achse (38) geschwenkt,

6.) Felgenprofilieranlage nach Anspruch 4, die das folgende Merkmal aufweist:

l) Der Träger (28) mit den Werkzeugaufnahmen (21-26, 31-36) an der Werkzeugwechseleinrichtung ist schlittenartig ausgebildet,

7.) Felgenprofilieranlage nach Anspruch 1, die das folgende Merkmal aufweist:

m) die Werkzeugaufnahmen (21-26, 31-36) an der Werkzeugwechselvorrichtung (13) übergreifen mit ihrer vom Träger (28) abkragenden Ausbildung die Transporteinrichtung (10),

8.) Felgenprofilieranlage nach Anspruch 1, die das folgende Merkmal aufweist:

n) in der Wechselposition (Fig.2) stehen die achsstummelförmig ausgebildeten Werkzeugaufnahmen (21-26, 31-36) an der Wechselvorrichtung (13) in waagerechter Ausrichtung vor den Werkzeugaufnahmen an der Profilieranlage (1, 11, 12), während in der Vorbereitungsphase die Schwinge (29) um vorzugsweise 90° von der Felgenprofilieranlage (1, 11, 12) weggeklappt ist (Fig.1).

9.) Felgenprofilieranlage nach einem oder mehreren der vorangegangenen Ansprüche, die die folgenden Merkmale aufweist:

o) den in Gegenüberstellung befindlichen Werkzeugaufnahmen an der Wechseleinrichtung (13) und an den Profiliermaschinen (1, 11, 12) ist eine Abziehvorrichtung (14, 15, 16) zugeordnet,

p) jede Profilierrolle (4, 5) weist eine Hinterschneidung (40) auf, in die die Abziehvorrichtung (14) eingreift.

10.) Felgenprofilieranlage nach einem oder mehreren der vorangegangenen Ansprüche, die das folgende Merkmal aufweist:

q) federbelastete Spannmittel (41) zur Sicherung der Profilierrollen (4) auf den Wellenstümpfen (45).

## Fig.1

Fig.2

Fig.3

Fig.4

Fig.5

Fig.6